# EUROPÄISCHE PATENTSCHRIFT

(11) **EP 2 479 362 B1**
(45) Veröffentlichungstag und Bekanntmachung des Hinweises auf die Patenterteilung: **07.12.2016**
(21) Anmeldenummer: 12150992.1
(22) Anmeldetag: 12.01.2012
(51) Int. Cl.: E05B 81/78, B60R 16/03, H02J 7/00

(54) **Batteriegespeiste Sensoranordnung mit reduziertem Ruhestrom**
Battery-fed sensor assembly with reduced standby current
Agencement de capteur alimenté par batterie avec courant de repos réduit

(30) Priorität: 20.01.2011 DE 102011000241
(43) Veröffentlichungstag der Anmeldung: 25.07.2012
(73) Patentinhaber: Huf Hülsbeck & Fürst GmbH & Co. KG, 42551 Velbert (DE)
(72) Erfinder: Steegmann, Bernd, 42579 Heiligenhaus (DE); Kulik, Klaus-Dieter, 42555 Velbert (DE)
(74) Vertreter: Zenz Patentanwälte Partnerschaft mbB

(56) Entgegenhaltungen:
- EP-A2- 1 231 698
- EP-A2- 1 820 700
- DE-A1- 4 337 792
- DE-A1- 10 160 266
- US-A1- 2010 244 560

## Beschreibung

Die Erfindung betrifft eine batteriegespeiste Sensoranordnung, insbesondere in einem Kraftfahrzeug, mit einer Sensorschaltung, die einen Spannungsversorgungsanschluss aufweist, einem mit dem Spannungsversorgungsanschluss gekoppelten Speisekondensator und einer mit der Sensorschaltung gekoppelten Steuerschaltung.

In einem Kraftfahrzeug gibt es eine Reihe von Sensoren, die auch dann aktiv sein sollen, wenn das Kraftfahrzeug abgestellt (beispielsweise geparkt) ist und der größte Teil der bordeigenen Elektronikschaltungen abgeschaltet bzw. in einen Ruhezustand versetzt ist. Beispielsweise sollten kapazitive Annäherungssensoren oder Berührungssensoren in einem Türaußengriff, welche die Annäherung bzw. Berührung eines Bedienerkörperteils erfassen sollen, um in Abhängigkeit davon eine Funkkommunikation mit einem ID-Geber (elektronischer Schlüssel) zum Zwecke der Entriegelung der Türschlösser zu starten, stets dann aktiv sein, wenn eine solche Annäherung eines Benutzers mit Entriegelungswunsch zu erwarten ist.

Aus der der DE 101 60 266 A1 ist eine Anordnung zur Ruhestromversorgung eines Fahrzeug-Bordnetzes bekannt, bei der das Bordnetz zwei Teilbordnetze umfasst, wobei ein 12V-Teilbordnetz über einen DC/DC-Wandler mit einem 42V-Teilbordnetz verbunden ist. Im Ruhezustand werden Sensoren, die an das 42-Teilbordnetz angekoppelt sind, durch die 12V-Spannungsquelle des 12V-Teilbordnetzes versorgt.

Selbstverständlich verbrauchen diese ständig aktiven Sensorschaltungen Energie. Dieser Energieverbrauch ist insbesondere dann zu reduzieren, wenn dadurch eine unerwünschte Entleerung der Batterie zu befürchten ist. Deshalb besteht stets der Wunsch, den Ruhestrom der Sensorschaltungen zu verringern. Eine Möglichkeit der Verringerung des durchschnittlichen Ruhestroms besteht darin, die Sensorschaltung nicht ständig, sondern nur periodisch in kurzen Abständen zu aktivieren. Selbstverständlich darf eine diese periodische Aktivierung der Sensorschaltung steuernde Steuereinrichtung (beispielsweise ein Controller) selbst nicht mehr Energie verbrauchen, als durch die periodische Abschaltung der Sensorschaltung eingespart wird. Zu diesem Zweck stehen aber eine Reihe von Controllerschaltungen zur Verfügung, die diese Bedingung erfüllen.

Die Problematik der Ruhestromverringerung tritt auch deshalb zunehmend in den Vordergrund, weil am Kraftfahrzeug immer mehr Sensorsysteme ständig aktiv sein müssen, um ihre Funktion zu erfüllen. So war bislang häufig nur der Annäherungssensor (z.B. am Fahrertür-Außengriff) ständig aktiv, dessen Auslösung das Fahrzeug "geweckt" hat. Hier wurde der durchschnittliche Ruhestrom durch relativ lange Taktzeiten verringert. Es ist nunmehr aber vorgesehen, einen weiteren Annäherungssensor (beispielsweise Fußschalter) zum automatischen Öffnen der Heckklappe vorzusehen, so dass es gewünscht wird, dass bei gleichzeitiger Aktivierung zweier Sensoren der durchschnittliche Ruhestrombedarf jedes der Sensoren zumindest halbiert wird.

Bisher wurde die Spannungsversorgung der Sensorschaltung durch einen Längsregler gewährleistet, der eine 12-V-Bordnetzspannung auf 2,5 V herunterregelte, wobei sich auf der 12-V-Seite ein durchschnittlicher Stromverbrauch von 400 µA ergab, wenn auch auf der 2,5-V-Seite 400 µA verbraucht wurden (vernachlässigt man den Stromverbrauch durch den Längsregler).

Aufgabe der Erfindung ist es, den durchschnittlichen Ruhestromverbrauch bei periodisch aktivierten Sensorschaltungen weiter zu reduzieren.

Diese Aufgabe wird erfindungsgemäß durch eine batteriegespeiste Sensoranordnung mit den Merkmalen des Anspruchs 1 gelöst. Die batteriegespeiste Sensoranordnung, insbesondere in einem Kraftfahrzeug, weist eine Sensorschaltung mit einem Spannungsversorgungsanschluss auf. Die Sensoranordnung umfasst ferner einen mit dem Spannungsversorgungsanschluss gekoppelten Speisekondensator und einen zwischen einer Speisebatterie und dem Speisekondensator eingekoppelten Schaltregler, der in einem Stromsparmodus so geregelt wird, dass er die Batteriespannung auf einen Bruchteil zur Speisung des Speisekondensators herabsetzt. Eine mit der Sensorschaltung und dem Schaltregler gekoppelte Steuerschaltung ist so konfiguriert, dass sie ein Schalten des Schaltreglers zum Nachladen des Speisekondensators unterdrückt, wenn sie die Sensorschaltung aktiviert. Die Steuerschaltung kann beispielsweise eine separate Schaltung sein, die einen eigenen Spannungsversorgungsanschluss aufweist. Bei einer bevorzugten Ausführungsform sind ein Teil der Sensorschaltung und die Steuerschaltung in einem Bauelement (z.B. einem Mikrocontroller) vereinigt, so dass die Sensorschaltung und die Steuerschaltung einen gemeinsamen Spannungsversorgungsanschluss haben.

Ein erster der Erfindung zugrundeliegender Gedanke besteht darin, den Längsregler durch einen Schaltregler zu ersetzen. Wird ein solcher Schaltregler, beispielsweise ein Tiefsetzsteller, verwendet, so kann ein durchschnittlicher Ruhestrom von beispielsweise 400 µA auf der 2,5-V-Seite in einen durchschnittlichen Ruhestrombedarf von beispielsweise etwa 100 µA auf der 12-V-Seite "transformiert" werden. Damit kann die gewünschte Ruhestromreduktion auf der Seite des Bordnetzes erreicht werden. Ist der Bruchteil beispielsweise kleiner als die Hälfte, so kann eine Ruhestromreduktion von etwa 50 % oder mehr erreicht werden. Ein zweiter Grundgedanke der Erfindung besteht darin, die sich durch das Schalten des Schaltreglers ergebenden störenden Einflüsse auf die Sensorschaltung zu vermeiden, indem die Sensorschaltung aus dem Speisekondensator versorgt wird und das Schalten des Schaltreglers zum Nachladen des Speisekondensators dann unterdrückt wird, wenn die Steuerschaltung die Sensorschaltung aktiviert. Von der Steuerschaltung werden sowohl die Sensorschaltung als auch der Schaltregler so gesteuert, dass der Schaltregler inaktiv ist (das heißt, nicht schaltet), wenn der Sensor aktiviert wird.

Bei einer bevorzugten Ausführungsform ist die Steuerschaltung so konfiguriert, dass sie - in dem Stromsparmodus - das Schalten des Schaltreglers periodisch wiederholt für eine vorgegebene Zeitdauer unterdrückt und jeweils innerhalb wenigstens eines Teils dieser Zeitdauer die Sensorschaltung aktiviert. Vorzugsweise wird die Zeitdauer, innerhalb derer die Sensorschaltung aktiviert wird, auf die minimale Zeitdauer beschränkt, die zum Erfassen des gewünschten Messwertes der Sensorschaltung erforderlich ist. Auch die Zeitdauer, in der das Schalten des Schaltreglers unterdrückt wird, wird auf ein Minimum begrenzt, damit ein möglichst geringer Abfall der Speisekondensatorspannung erreicht wird. Das Aktivieren der Sensorschaltung erfolgt zugleich mit dem Beginn des Unterdrückens des Schaltens des Schaltreglers oder kurze Zeit danach. Sobald das Sensorsignal innerhalb der jeweiligen Aktivierungsdauer des Sensors gewonnen wurde, kann das Schalten des Schaltreglers wieder zugelassen werden. Die periodische Wiederholung dieses Vorgangs wird beispielsweise durch eine Timerfunktion eines getakteten Mikrocontrollers gesteuert.

Bei einer ersten Ausführungsform der erfindungsgemäßen batteriegespeisten Sensoranordnung ist der Spannungsversorgungsanschluss der Sensorschaltung (der vorzugsweise zugleich der Spannungsversorgungsanschluss der Steuerschaltung ist) direkt mit dem Speisekondensator verbunden. Hierbei entspricht der Bruchteil der Versorgungsspannung, auf den die Batteriespannung herabgesetzt wird, der Nenn-Speisespannung der Sensorschaltung (und ggf. der Steuerschaltung). Üblicherweise sind die Nenn-Speisespannungen der Sensorschaltungen und Steuerschaltungen erheblich geringer als die Batteriespannungen in einem Kraftfahrzeug (beispielsweise 2,5 V im Vergleich zu 12 V Batteriespannung), so dass dieses deutliche Herabsetzen der Versorgungsspannung auch eine entsprechende Verringerung des durchschnittlichen Strombedarfs in dem Stromsparmodus ermöglicht. Die Zeiten der Deaktivierung des Schaltens des Schaltreglers sind dabei so gewählt, dass sich der Abfall der Versorgungsspannung während dieser Deaktivierung auf die Funktion der Sensorschaltung (und ggf. der Steuerschaltung) nicht negativ auswirkt. Beispielsweise könnten die Schaltungen so dimensioniert sein, dass sich bei einer Versorgungsspannung von 2,5 V während der Deaktivierung des Schaltreglers lediglich ein maximaler Spannungsabfall von 25 mV ergibt.

Bei einer bevorzugten Ausführungsform unterdrückt die Steuerschaltung das Schalten des Schaltreglers, indem sie an einen die zu regelnde Spannung abtastenden Eingangsanschluss des Schaltreglers eine Spannung anlegt, die über einer gewünschten Sollspannung liegt. Wird beispielsweise in dem Schaltregler eine integrierte Schaltung verwendet, die einen solchen Steueranschluss aufweist, so wird dieser Steueranschluss zum Abtasten der zu regelnden Spannung häufig mit dem Mittelabgriff eines Widerstands-Spannungsteilers verbunden, wobei der Widerstands-Spannungsteiler zwischen Masse und dem Ausgang des Schaltreglers, mit dem auch der Speisekondensator verbunden ist, eingekoppelt ist. In diesem Fall kann ein Ausgangsanschluss der Steuerschaltung, der im Falle einer gewünschten Deaktivierung des Schaltens des Schaltreglers eine hohe Spannung aufweist, ebenfalls mit diesem Mittelabgriff des Spannungsteilers gekoppelt werden.

Bei einer bevorzugten Weiterbildung umfasst die Sensorschaltung wenigstens zwei nacheinander aktivierte Sensoren und ist die Steuerschaltung so konfiguriert, dass sie in dem Stromsparmodus das Schalten des Schaltreglers periodisch wiederholt für mehrere aufeinanderfolgende, in ihrer Anzahl der Anzahl der Sensoren entsprechende vorgegebene Zeitdauern unterdrückt und jeweils innerhalb dieser Zeitdauer den zugehörigen Sensor aktiviert. Beispielsweise umfasst die Sensorschaltung zwei nacheinander aktivierte Sensoren. Dann wird das Schalten des Schaltreglers zunächst für eine erste vorgegebene Zeitdauer unterdrückt, in der der erste Sensor aktiviert wird. Anschließend wird das Schalten des Schaltreglers für eine weitere Zeitdauer unterdrückt, in der der zweite Sensor aktiviert wird. Zwischen der Aktivierung des ersten Sensors und der Aktivierung des zweiten Sensors könnte das Schalten des Schaltreglers für kurze Zeit wieder gestattet werden, um den Speisekondensator nachzuladen. Der gesamte Vorgang wird dann stets periodisch wiederholt.

Bei einer bevorzugten Ausführungsform ist diese Steuerschaltung so konfiguriert, dass zwischen den aufeinanderfolgenden vorgegebenen Zeitdauern der Aktivierung der Sensoren Pausenzeiten der Deaktivierung aller Sensoren vorgesehen sind. Innerhalb dieser Pausenzeiten sorgt die Steuerschaltung für ein sofortiges Nachladen des Speisekondensators, indem sie an den die zu regelnde Spannung abtastenden Eingangsanschluss des Schaltreglers eine Spannung anlegt, die wesentlich unter der eingestellten Sollspannung liegt. Dies kann beispielsweise bei Verwendung des oben beschriebenen Widerstands-Spannungsteilers durch Anlegen des Massepotenzials an den Mittelabgriff, der mit dem Eingangsanschluss der integrierten Schaltung des Schaltreglers verbunden ist, geschehen. Wird beispielsweise ein Mikrocontroller als Steuerschaltung verwendet, so könnte ein Ausgabe-Port des Mikrocontrollers, der in der gewünschten Nachladezeit auf Massepotenzial gelegt wird, mit dem Mittelabgriff des Widerstands-Spannungsteilers gekoppelt werden.

Bei einer zweiten Ausführungsform der erfindungsgemäßen batteriegespeisten Sensoranordnung ist der Spannungsversorgungsanschluss (der Sensorschaltung und ggf. der Steuerschaltung) über einen Längsregler mit dem Speisekondensator und dem Ausgang des Schaltreglers verbunden. Der Bruchteil der Versorgungsspannung liegt hierbei über der Nenn-Speisespannung der Sensorschaltung (und ggf. der Steuerschaltung). Diese Ausführungsform hat den Vorteil, dass der durch das Aussetzen des Schaltens des Schaltreglers bewirkte geringfügige Spannungsabfall am Speisekondensator durch den Längsregler ausgeglichen werden kann, so dass in der Zeit des Abschaltens des Schaltreglers kein Abfall der Versorgungsspannung der Sensorschaltung stattfindet.

Bei einer bevorzugten Weiterbildung dieser zweiten Ausführungsform ist es vorgesehen, dass in einem Normalbetriebsmodus ein Schaltbauelement des Schaltreglers derart eingeschaltet bleibt, dass der Eingang des Längsreglers mit der Batteriespannung versorgt wird. In diesem Normalbetriebsmodus ist somit die Funktion des Schaltreglers deaktiviert, so dass - wie im Stand der Technik - die Versorgungsspannung der Sensorschaltung (und der Steuerschaltung) mittels eines Längsreglers direkt aus der Batteriespannung gewonnen wird. Der Schaltregler wird somit nur im Stromsparmodus aktiviert, so dass nur in dem Stromsparmodus der Eingang des Längsreglers mit einem Bruchteil der Batteriespannung versorgt wird. Dies hat unter anderem den Vorteil, dass auch im Normalbetriebsmodus störende Einflüsse durch ein Schalten des Schaltreglers vermieden werden, so dass die Sensoren (und ggf. weitere Sensoren) jederzeit aktiviert werden können.

Bei einer bevorzugten Ausführungsform der batteriegespeisten Sensoranordnung umfasst die Steuerschaltung eine Regelschaltung zum Steuern eines Schaltbauelements des Schaltreglers, wobei ein Eingabeanschluss der Steuerschaltung die an dem Speisekondensator anliegende Spannung erfasst und ein Ausgabeanschluss der Steuerschaltung das Schalten des Schaltbauelements in Abhängigkeit von der an dem Speisekondensator anliegenden Spannung und in Abhängigkeit von der Aktivierung der Sensorschaltung steuert. Bei dieser bevorzugten Ausführungsform wird ein Teil der sonst üblicherweise in einer integrierten Schaltung eines Schaltreglers enthaltenen Steuerschaltung mit der Steuerschaltung zum Aktivieren und Deaktivieren der Sensorschaltung und zum Unterdrücken des Schaltens des Schaltreglers vereinigt. Das Schaltbauelement des Schaltreglers wird somit nicht nur, wie bei herkömmlichen Schaltreglern üblich, in Abhängigkeit von der Ausgangsspannung des Schaltreglers bzw. in Abhängigkeit vom Vergleich dieser Spannung mit einer Sollspannung geregelt, sondern zusätzlich in Abhängigkeit von der Aktivierung der Sensorschaltung.

Vorzugsweise ist der Schaltregler ein Tiefsetzsteller (Step-Down-Konverter). Das Schaltbauelement ist zwischen einem mit der Batterie gekoppelten Anschluss und einem Schaltungsknoten eingekoppelt, wobei dieser Schaltungsknoten über eine Induktivität mit dem Speisekondensator gekoppelt ist. Ferner ist der Schaltungsknoten über eine Diode mit Masse gekoppelt. Während des Einschaltens des Schaltbauelements fließt ein Strom, der zu einer Energiespeicherung innerhalb der Induktivität führt, so dass beim Ausschalten des Schaltbauelements die Induktivität für einen fortgesetzten Stromfluss, diesmal über die mit Masse gekoppelte Diode sorgt. Dieser Stromfluss führt zu einem Entladen der in der Induktivität gespeicherten Energie und zugleich zu einem Nachladen des Speisekondensators.

Vorzugsweise umfasst die Sensorschaltung wenigstens einen kapazitiven Sensor mit zugehöriger Auswerteschaltung zum Erfassen einer Annäherung eines Bedienerkörperteils an einen vorgegebenen Ort des Kraftfahrzeugs. Bei einer bevorzugten Ausführungsform umfasst die Sensorschaltung einen ersten kapazitiven Sensor, der an einem Türgriff des Kraftfahrzeugs angeordnet ist und beispielsweise die Annäherung der Hand des Bedieners erfassen soll. Ein zweiter kapazitiver Sensor ist beispielsweise im Heckbereich des Kraftfahrzeugs am Stoßfänger montiert und soll beispielsweise die Annäherung des Fußes eines Bedieners erfassen, um in Abhängigkeit davon für eine Entriegelung und ein Öffnen der Heckklappe zu sorgen.

Die oben genannte, der Erfindung zugrunde liegende Aufgabe wird ferner durch ein Verfahren zum Betreiben einer Sensorschaltung mit den Merkmalen des Anspruchs 12 gelöst. Bei diesem Verfahren wird die Sensorschaltung aus einem Speisekondensator mit Energie versorgt. Der Speisekondensator wird über einen zwischen einer Speisebatterie und dem Speisekondensator eingekoppelten Schaltregler nachgeladen. Der Schaltregler wird so gesteuert, dass er die Batteriespannung auf einen Bruchteil (dieser Batteriespannung) zur Speisung des Speisekondensators herabsetzt und ein Schalten des Schaltreglers wird zeitweilig unterdrückt, so dass der Speisekondensator von der Speisebatterie getrennt wird, wobei während des Unterdrückens des Schaltens die Sensorschaltung aktiviert wird. Dies ermöglicht die oben genannte Verringerung des durchschnittlichen Ruhestroms bei gleichzeitiger Vermeidung störender Einflüsse des Schaltens des Schaltreglers auf die Sensorschaltung.

Bei einer bevorzugten Weiterbildung dieses Verfahrens wird das Schalten des Schaltreglers periodisch wiederholt für eine vorgegebene Zeitdauer unterdrückt und wird die Sensorschaltung jeweils innerhalb wenigstens eines Teils dieser Zeitdauer aktiviert.

Vorzugsweise werden das Steuern des Schaltreglers zum Herabsetzen der Batteriespannung auf einen Bruchteil und das zeitweilige Unterdrücken des Schaltens des Schaltreglers während des Aktivierens der Sensorschaltung durchgeführt, wenn sich die Sensoranordnung in einem Stromsparmodus befindet. In einem Normalbetriebsmodus könnte beispielsweise das Schalten des Schaltreglers (bei geschlossenem Schalter) dauerhaft unterbrochen sein und die Batteriespannung direkt zur Versorgung der Sensorschaltung verwendet werden. Vorzugsweise wird in diesem Fall zwischen dem Speisekondensator und der Sensorschaltung ein Längsregler eingekoppelt und wird der Schaltregler in dem Normalbetriebsmodus derart dauerhaft eingeschaltet, dass der Speisekondensator auf die Spannung der Speisebatterie aufgeladen wird.

Vorteilhafte und/oder bevorzugte Weiterbildungen der Erfindung sind in den Unteransprüchen gekennzeichnet.

Nachfolgend wird die Erfindung anhand von in den Zeichnungen dargestellten bevorzugten Ausführungsbeispielen näher erläutert. In den Zeichnungen zeigen:
Figur 1 ein schematisches Blockschaltbild einer ersten Ausführungsform der erfindungsgemäßen batteriegespeisten Sensoranordnung;
Figur 2 eine schematische Darstellung des zeitlichen Verlaufs der Spannung am Speisekondensator, des Steuersignals zum Unterdrücken des Schaltens des Schaltreglers und der Zeiten des Ein- bzw. Ausschaltens des Schaltreglers und der Aktivierung der Sensoren; und
Figur 3 ein schematisches Blockschaltbild einer zweiten Ausführungsform der erfindungsgemäßen Sensoranordnung.

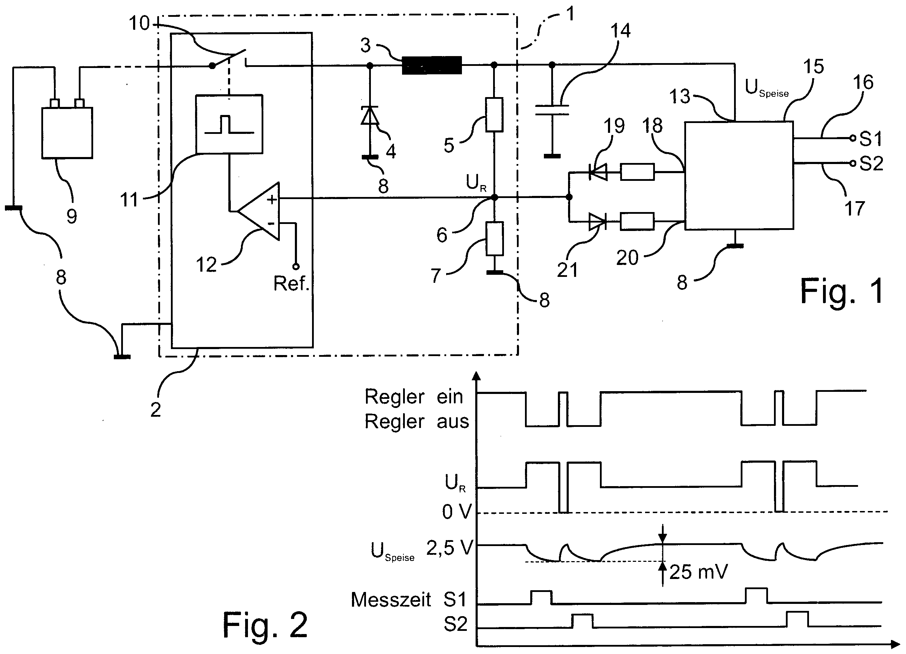

Figur 1 zeigt ein schematisches Blockschaltbild einer ersten Ausführungsform einer batteriegespeisten Sensoranordnung mit einem zwischen der Speisebatterie 9 und einem Speisekondensator 14 eingekoppelten Schaltregler 1, bei der die in einem Mikrocontroller 15 enthaltenen Sensor-Auswerteschaltungen und Steuerschaltungen direkt von dem Speisekondensator 14 mit Spannung versorgt werden.

Ein Pol der Speisebatterie 9 ist mit Masse 8 verbunden, während der andere Pol der Speisebatterie 9 mit dem Schaltregler 1 gekoppelt ist. Die Leitung zum Schaltregler 1 ist unterbrochen dargestellt. Damit soll angedeutet werden, dass diverse Bauelemente des Bordnetzes des Kraftfahrzeugs zwischen dem Pol der Speisebatterie 9 und dem Eingangsanschluss des Schaltreglers 1 eingekoppelt sein können. Der Schaltregler 1 ist als Step-Down-Konverter (Tiefsetzsteller) ausgeführt und umfasst eine integrierte Schaltung 2 mit einem Leistungsschalter 10, deren Ausgangsknoten einerseits über eine Induktivität 3 mit dem Speisekondensator 14 und andererseits über einen Gleichrichter 4 mit Masse 8 verbunden ist. Bei einer alternativen Ausführungsform könnte die integrierte Schaltung 2 auch zwei zwischen dem Batterieanschluss und Masse hintereinander geschaltete Schaltbauelemente enthalten, so dass der externe Gleichrichter 4 auch entfallen könnte. Der Ausgang des Schaltreglers 1 ist über einen aus den Widerständen 5 und 7 bestehenden Spannungsteiler mit Masse gekoppelt. Am Mittelabgriff 6 des Spannungsteilers kann eine zur Ausgangsspannung des Schaltreglers 1 proportionale Spannung U_{R} abgegriffen werden. Die Spannung U_{R} wird üblicherweise einem Steuereingang der integrierten Schaltung 2 zugeführt, wobei der Steuereingang mit einem Komparator 12 gekoppelt ist, der die abgegriffene Spannung U_{R} mit einer Referenzspannung (Ref.) vergleicht. In Abhängigkeit vom Über- bzw. Unterschreiten der Referenzspannung wird dann ein Ausgangssignal des Komparators 12 erzeugt, dass einen Impulsgeber 11 entsprechend veranlasst, den Schalter 10 zu öffnen und zu schließen. Auf diese Weise wird die Ausgangsspannung des Schaltreglers 1 auf eine Spannung geregelt, die in einem vorgegebenen Verhältnis zu der an den Komparator 12 angelegten Referenzspannung (Ref.) steht.

Die Ausgangsspannung des Schaltreglers 1 speist den Speisekondensator 14, wobei der Ausgang mit dem Spannungsversorgungsanschluss 13 des Mikrocontrollers 15 gekoppelt ist, somit mit dem Spannungsversorgungsanschluss der Sensorschaltung und Steuerschaltung. Der Mikrocontroller 15 enthält üblicherweise einen Mikroprozessor, diverse Speicher zur Speicherung von Programmen und Daten und mit digitalen und analogen Eingabe- und Ausgabeports gekoppelte Schnittstellenschaltungen. Die Schnittstellenschaltungen umfassen beispielsweise Analog-Digital-Umsetzer und Digital-Analog-Umsetzer. Zwei Eingabeports des Mikrocontrollers 15 sind über die Leitungen 16 bzw. 17 mit Sensoren S1 bzw. S2 gekoppelt. Beispielsweise handelt es sich hierbei um Sensorelektroden eines kapazitiven Annäherungssensors. Der Mikrocontroller 15 ist so programmiert, dass er die mit den Sensoren S1 und S2 gekoppelten Eingabeports abfragt und die Sensorausgangssignale auswertet. Zugleich können die Eingabeports auch als Ausgabeports geschaltet werden, so dass sie die angekoppelten Sensorschaltungen mit entsprechenden Steuerspannungen versorgen. Die Ansteuerung und Auswertung der Sensoren erfolgt somit programmgesteuert durch den Mikrocontroller 15. Dieses Ansteuern der mit den Sensoren S1 und S2 verbundenen Leitungen 16 und 17 sowie das Auswerten der über diese Leitungen 16 und 17 eingehenden Signale findet während der sogenannten Messzeit statt. Während der jeweiligen Messzeiten für die Sensoren S1 und S2 sorgt der Mikrocontroller 15 als Steuerschaltung unter anderem dafür, dass das Schalten des Schaltreglers 1 unterdrückt, das heißt ausgesetzt wird. Zu diesem Zweck legt der Mikrocontroller 15 auf einem Ausgabeport 18 ein hohes Spannungssignal an, welches über einen Widerstand und eine Diode 19 an den Abgriff 6 des aus den Widerständen 5 und 7 bestehenden Spannungsteilers angelegt wird. Die Werte des Spannungsteilers und der an den Komparator 12 angelegte Referenzwert sind dabei so gewählt, dass die am Ausgabeport 18 angelegte hohe Spannung über der auf dem Abgriff 6 einzustellenden Sollspannung liegt. Da diese Spannung auch über der Referenzspannung liegt, liegt am Ausgang des Komparators 12 diejenige Spannung an, die zu einem Aussetzen der von dem Impulsgeber 11 erzeugten Schaltimpulse und somit zu einem Unterdrücken eines weiteren Schaltens des Schalters 10 führt; der Schalter 10 bleibt geöffnet. Dadurch wird der Speisekondensator 14 nicht weiter aus dem Schaltregler 1 nachgeladen, so dass die Spannungsversorgung des Mikrocontrollers 15, also der Sensorschaltungen und der Steuerschaltung, nunmehr ausschließlich aus dem Speisekondensator 14 gespeist wird. Durch den Stromverbrauch der Sensorschaltungen und des Mikrocontrollers 15 kommt es zu einer Entladung des Speisekondensators 14 und somit zu einem geringfügigen Spannungsabfall der Versorgungsspannung am Spannungsversorgungsanschluss 13 des Mikrocontrollers 15.

Die Abläufe sind in Figur 2 näher veranschaulicht. In der obersten Zeile zeigt ein binäres Signal an, ob der Schaltregler 1 eingeschaltet oder ausgeschaltet ist. Die untersten beiden Zeilen zeigen mit jeweils einem binären Signal an, ob eine Messung des Sensors S1 oder des Sensors S2 stattfindet. Die Messzeiten der Sensoren sind durch ein hohes Signal veranschaulicht, während diejenigen Zeiten, in denen die Sensoren inaktiv sind, durch ein niedriges Signal dargestellt sind. Ein Vergleich dieser Messzeiten in den untersten Zeilen des Diagramms gemäß Figur 2 mit den Darstellungen des Einschaltens und Ausschaltens des Schaltreglers in der obersten Zeile zeigt, dass die Messungen jeweils dann stattfinden, wenn der Schaltregler 1 ausgeschaltet ist. Das dazu am Abgriff 6 bzw. am Eingang des Komparators 12 anliegende Steuersignal ist ebenfalls in Figur 2 als U_{R} dargestellt. Normalerweise, das heißt während des Einschaltens des Schaltreglers 1, befindet sich U_{R} auf irgendeinem Zwischenpegel zwischen der maximalen und der minimalen Spannung, wobei dieser Zwischenpegel proportional der Ausgangsspannung des Schaltreglers 1 ist. Sobald der Regler ausgeschaltet werden soll, legt der Mikrocontroller 15 über den Ausgabeport 18 und die Diode 19 ein hohes Spannungssignal an den Abgriff 6 an, so dass die Spannung U_{R} auf einen hohen Pegel ansteigt. Dies ist sowohl für die erste Austastung des Schaltreglers während der Messzeit des Sensors S1 als auch die zweite Austastung des Schaltreglers 1 während der Messzeit des Sensors S2 zu erkennen. Während des Ausschaltens des Schaltreglers 1 fällt die Speisespannung am Spannungsversorgungsanschluss 13, das heißt die über dem Speisekondensator 14 anliegende Spannung, aufgrund des Stromverbrauchs geringfügig ab, wie in dem Diagramm von Figur 2 zu erkennen ist. Beispielsweise beträgt der maximale Abfall 25 mV bei einer Speisespannung von 2,5 V.

Bei dem in den Figuren 1 und 2 dargestellten Ausführungsbeispiel werden zwei Sensoren S1 und S2 von dem Mikrocontroller 15 versorgt und ausgewertet. Dies erfolgt nicht gleichzeitig, sondern kurz hintereinander; zunächst wird der Sensor S1 angesteuert und abgefragt, dann der Sensor S2. Während der beiden kurz aufeinanderfolgenden Messzeiten wird der Schaltregler 1 ausgeschaltet. Beispielsweise wird der Regler für jeden Sensor für eine Zeitdauer von etwa 8 ms ausgeschaltet. Beispielsweise wird der Regler für jeden Sensor für eine Zeitdauer von etwa 8 ms ausgeschaltet, wobei zwischen den beiden Ausschaltperioden eine kleine Pause von etwa 1 ms eingeschoben ist. Nach einer längeren Pause von beispielsweise etwa 80 ms werden erneut die beiden Sensoren kurz hintereinander angesteuert und abgefragt.

Um den Spannungsabfall auch bei der Messzeit für den zweiten Sensor S2 gering zu halten, ist es vorzugsweise vorgesehen, in der kurzen Pause zwischen den Messzeiten S1 und S2 den Speisekondensator 14 durch den Schaltregler 1 nachzuladen. Um zu gewährleisten, dass der Schaltregler 1 in der kurzen Pause zwischen den beiden Messzeiten den Speisekondensator 14 nachlädt, ist erfindungsgemäß vorgesehen, dass der Mikrocontroller 15 die Spannung U_{R} am Abgriff 6 bzw. am Eingang des Komparators 12 auf einen tiefen Pegel, beispielsweise auf Masse, herabzieht. Dies wird ausgeführt, indem ein Ausgabeport 20 des Mikrocontrollers 15 auf einen niedrigen Pegel (auf Masse) gezogen wird und dieser Ausgabeport 20 über einen Widerstand und eine Diode 21 mit dem Abgriff 6 gekoppelt wird. In dem Spannungsverlauf für U_{R} in Figur 2 ist dies durch ein Herabziehen der Spannung auf einem Pegel von 0 V innerhalb der kurzen Pause zwischen den zwei Ausschaltperioden des Reglers dargestellt. Beim Herabziehen der Spannung am Abgriff 6 auf 0 V wird dem Komparator 12 eine zu tiefe Ausgangsspannung des Schaltreglers 1 vorgetäuscht. Daraufhin sorgt die integrierte Schaltung 2 für ein sofortiges Einschalten des Schalters 10 zum Nachladen des Kondensators 14. Dadurch ergibt sich ein Spannungsanstieg der Speisespannung U_{Speise}, wie er ebenfalls in Figur 2 dargestellt ist.

Selbstverständlich hängt die Stärke des Abfalls der Speisespannung U_{SPeise} am Spannungsversorgungsanschluss 13 auch von der Größe des Speisekondensators 14 ab. Ein großer Kondensator 14 würde zu einem geringeren Spannungsabfall während der Ausschaltzeit des Schaltreglers 1 führen. Allerdings beansprucht ein größerer Speisekondensator 14 einen größeren Bauraum; außerdem ist ein Kondensator mit einer höheren Kapazität teurer. Diese verschiedenen Vor- und Nachteile sind gegeneinander abzuwägen. Bei einer bevorzugten Ausführungsform hat der Speisekondensator 14 beispielsweise eine Kapazität von etwa 10 bis 22 µF.

Das Abschalten des Schaltreglers 1 während der Messzeiten der Sensoren S1 und S2 beseitigt mögliche Einflüsse der Schaltvorgänge auf die Messergebnisse der Sensoren. Vorzugsweise handelt es sich bei den Sensoren S1 und S2 um kapazitive Berührungs- oder Annäherungssensoren am Außenbereich des Kraftfahrzeugs. Bei diesen Sensoren könnten Schaltvorgänge Ladungsänderungen der Elektroden der kapazitiven Sensoren und somit Annäherungen von Objekten vortäuschen und zu unerwünschten Aufweckvorgängen mit entsprechender Belastung der Batterie führen. Das Unterdrücken des Schaltens eines Schaltreglers hat aber auch bei anderen Sensoren Vorteile, so beispielsweise bei Funkempfängern, wobei Funkempfänger im Rahmen dieser Beschreibung ebenfalls Sensoren bzw. Sensorschaltungen im Sinne des Erfindungsgegenstands darstellen. Ein zusätzlicher positiver Effekt besteht darin, dass durch Abschalten des Schaltreglers und Öffnen des Schalters 10 auch eine Entkopplung von den störenden EMV-Einflüssen des Fahrzeugs (seiner Leitungs- und Bussysteme) stattfindet.

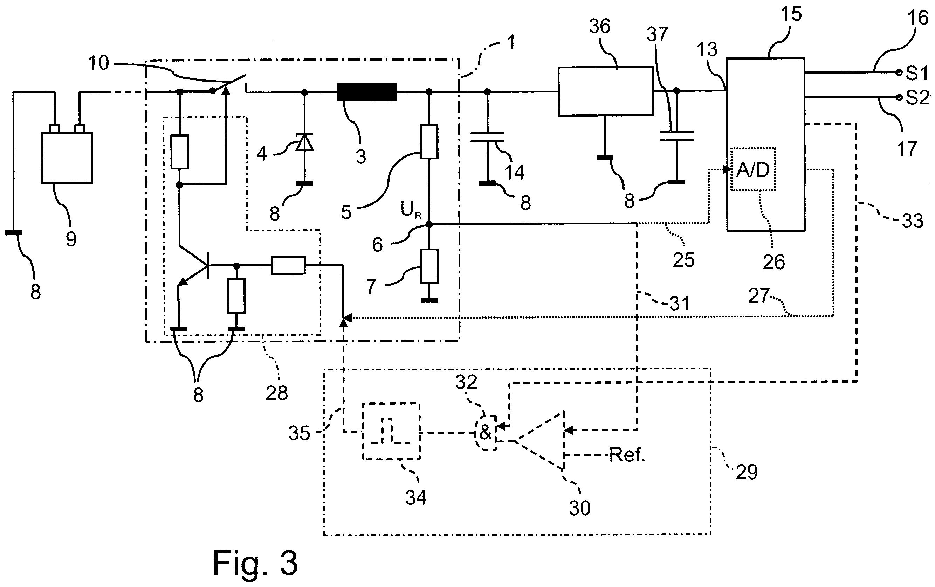

Figur 3 zeigt ein schematisches Blockschaltbild einer zweiten Ausführungsform der erfindungsgemäßen Sensoranordnung, bei der zwischen dem Speisekondensator 14 und dem Spannungsversorgungsanschluss 13 des Mikrocontrollers 15, das heißt der Sensorschaltungen und der Steuerschaltung, ein Längsregler 36 eingekoppelt ist, der für ein Konstanthalten der Versorgungsspannung der Sensorschaltung und der Steuerschaltung auch während eines Abfalls der über dem Speisekondensator 14 anliegenden Spannung aufgrund der fehlenden Nachspeisung sorgt. Schaltungselemente, die der in Figur 1 gezeigten ersten Ausführungsform und der in Figur 3 gezeigten zweiten Ausführungsform gemeinsam sind, sind mit denselben Bezugsziffern versehen. Wiederum ist ein Pol der Speisebatterie 9 mit Masse 8 und der andere Pol über diverse Leitungen und hier nicht dargestellte Bauelemente des Bordnetzes mit dem Eingangsanschluss des Schaltreglers 1 gekoppelt. Der Schaltregler 1 umfasst einen elektronischen Schalter 10, der die Versorgungsspannung der Speisebatterie 9 mit einem Knoten koppelt, mit dem einerseits eine mit dem Ausgang des Schaltreglers 1 verbundene Induktivität 3 und andererseits eine mit Masse 8 verbundene Diode 4 verbunden sind. Der Schaltregler 1 ist somit ein Tiefsetzsteller (Step-Down-Konverter). Der Ausgang des Schaltreglers 1 speist den Speisekondensator 14. Ferner ist an den Ausgang des Schaltreglers 1 ein aus den Widerständen 5 und 7 gebildeter Spannungsteiler angekoppelt, an dessen Abgriff 6 die Spannung U_{R} abgegriffen werden kann, die proportional der Ausgangsspannung des Schaltreglers 1 ist. Der Schalter 10 des Schaltreglers 1 wird durch eine Ansteuerelektronik 28 angesteuert, die einen Eingangsanschluss aufweist. Bei dem in Figur 3 dargestellten Ausführungsbeispiel sind sowohl der Mittelabgriff 6 des die Ausgangsspannung abtastenden Spannungsteilers als auch der Steueranschluss für die Ansteuerschaltung 28 aus dem Schaltregler 1 herausgeführt und mit externen Steuerschaltungen verbunden. Diese Steuerschaltungen werten die Spannung U_{R} an dem Abgriff 6 aus und steuern in Abhängigkeit davon den Steueranschluss der Ansteuerschaltung 28 an.

Zwischen dem Speisekondensator 14 und dem Spannungsversorgungsanschluss 13 ist ein Längsregler 36 eingekoppelt, der auch bei schwankender Eingangsspannung für eine konstante Ausgangsspannung am Spannungsversorgungsanschluss 13 sorgt. Ferner ist zwischen dem Ausgang des Längsreglers 36 und Masse 8 ein Pufferkondensator 37 eingekoppelt.

Wie auch bei der Schaltung gemäß Figur 1 sind zwei kombinierte Eingabe/Ausgabe-Ports mit Leitungen 16 und 17 der Sensoren S1 bzw. S2 gekoppelt. Der Mikrocontroller 15 enthält die zum Ansteuern und Auswerten der Sensoren S1 und S2 erforderlichen Schaltungen und programmierte Logik.

Figur 3 zeigt zwei Ausführungsbeispiele der zweiten Ausführungsform der erfindungsgemäßen Sensoranordnung. Bei einem ersten Ausführungsbeispiel ist der Mittelabgriff 6 des Spannungsteilers aus den Widerständen 5 und 7 mit einem Eingabeport des Mikrocontrollers 15 gekoppelt, wobei dieser Eingabeport ein Analogeingang ist, der die abgegriffene Spannung U_{H} an einen Analog-Digital-Umsetzer 26 anlegt, der die jeweilige Spannung U_{R} in einen entsprechenden Digitalwert umsetzt, der von dem Mikrocontroller 15 verarbeitet werden kann. Ferner weist bei diesem Ausführungsbeispiel der Mikrocontroller 15 einen Ausgabeport auf, an den eine Leitung 27 angekoppelt ist, die den Ausgabeport des Mikrocontrollers 15 mit dem Steuereingang der Ansteuerschaltung 28 des Schaltreglers 1 verbindet. Der Mikrocontroller 15 sorgt hierbei direkt für die Ansteuerung des Schalters 10 des Schaltreglers 1. Dabei ist der Mikrocontroller 15 so programmiert, dass er die Ansteuerung des Schalters 10 des Schaltreglers 1 einerseits in Abhängigkeit von der der Ausgangsspannung proportionalen Abgriffsspannung U_{R} regelt und andererseits die Ansteuerung des Schalters 10 unterbricht, sobald eine Messzeit einer der Sensoren S1 und S2 vorgesehen ist. Dieses erste Ausführungsbeispiel der zweiten Ausführungsform der erfindungsgemäßen Sensoranordnung ist durch die gepunkteten Linien gemäß Figur 3 dargestellt.

Darüber hinaus finden sich in Figur 3 Schaltelemente, die in einer Strichlinie dargestellt sind. Diese gehören zu einem alternativen zweiten Ausführungsbeispiel der zweiten Ausführungsform, bei der nicht der Mikrocontroller 15 die Impuls-Ansteuerung des Schalters 10 übernimmt, sondern diese Aufgabe durch eine externe Schaltung 29 übernommen wird. Die externe Schaltung 29 enthält wiederum einen Komparator 30, der über eine Leitung 31 mit dem Mittelabgriff 6 des Spannungsteilers am Ausgang des Schaltreglers 1 verbunden ist und der die Abgriffsspannung U_{R} mit einer Referenzspannung vergleicht. In Abhängigkeit von dem Vergleich wird ein Impulsgeber 34 angesteuert, dessen Ausgang über die Leitung 35 mit dem Steuereingang der Ansteuerschaltung 28 für den Schalter 10 gekoppelt ist. Damit während der Messzeiten der Sensoren S1 und S2 das Schalten des Schaltreglers 1 unterdrückt werden kann, ist zwischen dem Komparator 30 und dem Impulsgenerator 34 ein UND-Gatter 32 eingekoppelt, das die Ausgangssignale des Komparators 30 nur dann zum Impulsgeber 34 durchlässt, wenn am zweiten Ausgang des UND-Gatters 32 ein hohes Signal anliegt, dass das UND-Gatter 32 über die Leitung 33 von dem Mikrocontroller 15 empfängt. Der Mikrocontroller 15 legt ein hohes Signal auf die Leitung 33 an, wenn der Schaltregler 1 freigegeben werden soll, das heißt, wenn keiner der Sensoren S1 und S2 aktiv ist.

Die zweite Ausführungsform der erfindungsgemäßen Sensoranordnung hat den Vorteil, dass die Spannung am Stromversorgungsanschluss 13 durch den Längsregler 36 konstant gehalten werden kann, während die Spannung am Speisekondensator 14 infolge eines Abschaltens des Schaltreglers 1 geringfügig abfällt. Außerdem hat diese Ausführungsform den Vorteil, dass außerhalb des Stromsparmodus, das heißt in einem Normalbetriebsmodus, der Schaltregler bei geschlossenem Schalter 10 abgeschaltet werden kann, so dass der Speisekondensator 14 auf die volle Batteriespannung der Speisebatterie 9 aufgeladen wird. Im Normalbetriebsmodus, in dem der Kondensator 14 auf die volle Batteriespannung geladen wird, sorgt der Längsregler 36 für das Herunterregeln auf die Versorgungsspannung am Spannungsversorgungsanschluss 13, beispielsweise auf 2,5 V. Im Stromsparmodus wird der Schaltregler außerhalb der Messzeiten der Sensoren aktiviert, so dass der Speisekondensator 14 beispielsweise auf eine Spannung von 3 V aufgeladen wird. Der Längsregler 36 sorgt dann für ein Herunterregeln dieser Spannung auf die Versorgungsspannung von 2,5 V. Während der Messzeiten der Sensoren S1 und S2 sorgt der Mikrocontroller 15 für eine Deaktivierung des Schaltens des Schaltreglers, so dass die Spannung über dem Speisekondensator 14 (beispielsweise ausgehend von den genannten 3 V) geringfügig abfällt, was allerdings keine Auswirkungen auf die Spannung am Spannungsversorgungsanschluss 13 hat. Im Stromsparmodus könnten beispielsweise folgende Spannungs- und Stromwerte gemessen werden: Am Spannungsversorgungsanschluss 13 des Mikrocontrollers 15 könnte eine Spannung von 2,5 V anliegen, wobei ein minimaler Stromverbrauch von 400 µA gemessen werden könnte. Am Eingang des Längsreglers, das heißt am Speisekondensator 14 liegt beispielsweise eine Spannung von 3 bis 4 V an, wobei ebenfalls ein Stromverbrauch von etwa 400 µA erreicht wird. Am Eingang des Schaltregler 1 dagegen, an dem die Batteriespannung von 12 V anliegt, könnte ein Stromverbrauch von lediglich etwa 100 µA erzielt werden.

Bei der in Figur 3 dargestellten Ausführungsform ist ebenfalls vorzugsweise vorgesehen, dass die beiden Sensoren S1 und S2 nacheinander aktiviert werden. Allerdings ist es hier aufgrund des Konstanthaltens der Versorgungsspannung am Anschluss 13 nicht erforderlich, dass der Schaltregler zwischen den beiden Aktivierungszeiten der Sensoren S1 und S2 kurzzeitig den Speisekondensator 14 nachlädt, wie dies vorzugsweise bei der Ausführungsform gemäß Figur 1 der Fall war.

## Patentansprüche

1. Batteriegespeiste Sensoranordnung, insbesondere in einem Kraftfahrzeug, aufweisend:
eine Sensorschaltung, wobei die Sensorschaltung einen Spannungsversorgungsanschluss (13) aufweist,
einen mit dem Spannungsversorgungsanschluss (13) gekoppelten Speisekondensator (14),
einen zwischen einer Speisebatterie (9) und dem Speisekondensator (14) eingekoppelten Schaltregler (1), der in einem Stromsparmodus so geregelt wird, dass er die Batteriespannung auf einen Bruchteil zur Speisung des Speisekondensators (14) herabsetzt, und
eine mit der Sensorschaltung und dem Schaltregler (1) gekoppelte Steuerschaltung (in 15), die so konfiguriert ist, dass sie ein Schalten des Schaltreglers (1) zum Nachladen des Speisekondensators (14) unterdrückt, wenn sie die Sensorschaltung aktiviert.

2. Batteriegespeiste Sensoranordnung nach Anspruch 1, **dadurch gekennzeichnet, dass** die Steuerschaltung (in 15) so konfiguriert ist, dass sie in dem Stromsparmodus das Schalten des Schaltreglers (1) periodisch wiederholt für eine vorgegebene Zeitdauer unterdrückt und jeweils innerhalb wenigstens eines Teils dieser Zeitdauer die Sensorschaltung aktiviert.

3. Batteriegespeiste Sensoranordnung nach einem der Ansprüche 1 oder 2, **dadurch gekennzeichnet, dass** der Spannungsversorgungsanschluss (13) mit dem Speisekondensator (14) verbunden ist und der Bruchteil der Versorgungsspannung der Nenn-Speisespannung der Sensorschaltung entspricht.

4. Batteriegespeiste Sensoranordnung nach Anspruch 3, **dadurch gekennzeichnet, dass** die Steuerschaltung (in 15) das Schalten des Schaltreglers (1) unterdrückt, indem sie an einen die zu regelnde Spannung abtastenden Eingangsanschluss (6) des Schaltreglers eine Spannung anlegt, die über einer eingestellten Sollspannung liegt.

5. Batteriegespeiste Sensoranordnung nach Anspruch 4, **dadurch gekennzeichnet, dass** die Sensorschaltung wenigstens zwei nacheinander aktivierte Sensoren umfasst und die Steuerschaltung (in 15) so konfiguriert ist, dass sie in dem Stromsparmodus das Schalten des Schaltreglers (1) periodisch wiederholt für mehrere aufeinanderfolgende, in ihrer Anzahl der Anzahl der Sensoren entsprechende vorgegebene Zeitdauern unterdrückt und jeweils innerhalb dieser Zeitdauer den zugehörigen Sensor aktiviert.

6. Batteriegespeiste Sensoranordnung nach Anspruch 5, **dadurch gekennzeichnet, dass** Steuerschaltung (in 15) so konfiguriert ist, dass zwischen den aufeinanderfolgenden vorgegebenen Zeitdauern der Aktivierung der Sensoren Pausenzeiten der Deaktivierung aller Sensoren vorgesehen sind, wobei innerhalb dieser Pausenzeiten die Steuerschaltung für ein sofortiges Nachladen des Speisekondensators sorgt, indem sie an den die zu regelnde Spannung abtastenden Eingangsanschluss (6) des Schaltreglers (1) eine Spannung anlegt, die wesentlich unter der eingestellten Sollspannung liegt.

7. Batteriegespeiste Sensoranordnung nach Anspruch 1 oder 2, **dadurch gekennzeichnet, dass** der Spannungsversorgungsanschluss (13) über einen Längsregler (36) mit dem Speisekondensator (14) verbunden ist und der Bruchteil der Versorgungsspannung über der Nenn-Speisespannung der Sensorschaltung liegt.

8. Batteriegespeiste Sensoranordnung nach Anspruch 7, **dadurch gekennzeichnet, dass** in einem Normalbetriebsmodus ein Schaltbauelement (10, 28) des Schaltreglers (1) derart eingeschaltet bleibt, dass der Eingang des Längsreglers (36) mit der Batteriespannung versorgt wird.

9. Batteriegespeiste Sensoranordnung nach einem der Ansprüche 1 - 3, 7 oder 8, **dadurch gekennzeichnet, dass** die Steuerschaltung (in 15) eine Regelschaltung zum Steuern eines Schaltbauelements (10, 28) des Schaltreglers umfasst, wobei ein Eingabeanschluss der Steuerschaltung (in 15) die an dem Speisekondensator (14) anliegende Spannung erfasst und ein Ausgabeanschluss der Steuerschaltung (in 15) das Schalten des Schaltbauelements (10, 28) in Abhängigkeit von der an dem Speisekondensator anliegenden Spannung und von der Aktivierung der Sensorschaltung steuert.

10. Batteriegespeiste Sensoranordnung nach einem der Ansprüche 1 - 9, **dadurch gekennzeichnet, dass** der Schaltregler (1) ein Tiefsetzsteller ist.

11. Batteriegespeiste Sensoranordnung nach einem der Ansprüche 1 - 10, **dadurch gekennzeichnet, dass** die Sensorschaltung wenigstens einen kapazitiven Sensor mit zugehöriger Auswerteschaltung zum Erfassen einer Annäherung eines Bedienerkörperteils umfasst.

12. Verfahren zum Betreiben einer Sensorschaltung, wobei
die Sensorschaltung aus einem Speisekondensator mit Energie versorgt wird,
der Speisekondensator über einen zwischen einer Speisebatterie und dem Speisekondensator eingekoppelten Schaltregler nachgeladen wird,
der Schaltregler so gesteuert wird, dass er die Batteriespannung auf einen Bruchteil zur Speisung des Speisekondensators herabsetzt, und ein Schalten des Schaltreglers zeitweilig unterdrückt wird, so dass der Speisekondensator von der Speisebatterie getrennt wird,
wobei während des Unterdrückens des Schaltens die Sensorschaltung aktiviert wird.

13. Verfahren nach Anspruch 12, **dadurch gekennzeichnet, dass** das Schalten des Schaltreglers periodisch wiederholt für eine vorgegebene Zeitdauer unterdrückt wird und jeweils innerhalb wenigstens eines Teils dieser Zeitdauer die Sensorschaltung aktiviert wird.

14. Verfahren nach Anspruch 12 oder 13, **dadurch gekennzeichnet, dass** das Steuern des Schaltreglers zum Herabsetzen der Batteriespannung auf einen Bruchteil und das zeitweilige Unterdrücken des Schaltens des Schaltreglers während des Aktivierens der Sensorschaltung in einem Stromsparmodus durchgeführt werden.

15. Verfahren nach Anspruch 14, **dadurch gekennzeichnet, dass** zwischen dem Speisekondensator und der Sensorschaltung ein Längsregler eingekoppelt wird, und der Schaltregler in einem Normalbetriebsmodus dauerhaft eingeschaltet wird, so dass der Speisekondensator auf die Spannung der Speisebatterie aufgeladen wird.

## Claims

1. A battery-fed sensor assembly, in particular in a motor vehicle, comprising:
a sensor circuit, wherein the sensor circuit comprises a voltage supply connection (13),
a feeding capacitor (14) coupled with the voltage supply connection (13),
a switching regulator (1) coupled in between a feeding battery (9) and the feeding capacitor (14), the switching regulator being regulated in a power saving mode in such a way that it lowers the battery voltage to a fraction for feeding the feeding capacitor (14), and
a control circuit (in 15) coupled with the sensor circuit and the switching regulator (1), the control circuit being configured such that it suppresses switching of the switching regulator (1) for recharging the feeding capacitor (14), when it activates the sensor circuit.

2. The battery-fed sensor assembly according to claim 1, **characterised in that** the control circuit (in 15) is configured in such a way that when in power saving mode, it periodically repeatedly suppresses switching of the switching regulator (1) for a specified time duration and respectively activates the sensor circuit within at least a part of this time duration.

3. The battery-fed sensor assembly according to one of claims 1 or 2, **characterised in that** the voltage supply connection (13) is connected to the feeding capacitor (14) and the fraction of the supply voltage corresponds to the nominal input voltage of the sensor circuit.

4. The battery-fed sensor assembly according to claim 3, **characterised in that** the control circuit (in 15) suppresses switching of the switching regulator (1) **in that** it applies a voltage to an input connection (6) of the switching regulator sampling the voltage to be regulated, wherein the applied voltage lies above a set required voltage.

5. The battery-fed sensor assembly according to claim 4, **characterised in that** the sensor circuit comprises at least two successively activated sensors and the control circuit (in 15) is configured in such a way that when in power saving mode, it periodically repeatedly suppresses switching of the switching regulator (1) for a number of successive specified time durations, the number of time durations corresponding to the number of sensors, and respectively within this time duration activates the associated sensor.

6. The battery-fed sensor assembly according to claim 5, **characterised in that** the control circuit (in 15) is configured such that pause times of deactivating all sensors are provided between successive specified time durations of activating the sensors, wherein within these pause times the control circuit provides for immediate recharging of the feeding capacitor **in that** it applies a voltage to the input connection (6) of the switching regulator (1) sampling the voltage to be regulated, wherein the applied voltage lies substantially below the set required voltage.

7. The battery-fed sensor assembly according to claim 1 or 2, **characterised in that** the voltage supply connection (13) is connected via a linear regulator (36) to the feeding capacitor (14) and the fraction of the supply voltage lies above the nominal input voltage of the sensor circuit.

8. The battery-fed sensor assembly according to claim 7, **characterised in that** when in normal operating mode a switching constructional element (10, 28) of the switching regulator (1) remains switched on such that the input of the linear regulator (36) is supplied with battery voltage.

9. The battery-fed sensor assembly according to one of claims 1 - 3, 7 or 8, **characterised in that** the control circuit (in 15) comprises a regulating circuit for controlling a switching constructional element (10, 28) of the switching regulator, wherein an input connection of the control circuit (in 15) detects the voltage applied to the feeding capacitor (14) and an output connection of the control circuit (in 15) controls switching of the switching constructional element (10, 28) in dependence of the voltage applied to the feeding capacitor and the activation of the sensor circuit.

10. The battery-fed sensor assembly according to one of claims 1 to 9, **characterised in that** the switching regulator (1) is a buck converter.

11. The battery-fed sensor assembly according to one of claims 1 to 10, **characterised in that** the sensor circuit comprises at least one capacitive sensor with associated evaluation circuit for detecting an approaching operator body part.

12. A method for operating a sensor circuit, wherein
the sensor circuit is supplied with energy from a feeding capacitor,
the feeding capacitor is recharged via a switching regulator coupled in between a feeding battery and the feeding capacitor,
the switching regulator is controlled in such a way that it lowers the battery voltage to a fraction for feeding the feeding capacitor, and switching of the switching regulator is temporarily suppressed so that the feeding capacitor is disconnected from the feeding battery,
wherein the sensor circuit is activated while switching is being suppressed.

13. The method according to claim 12, **characterised in that** switching of the switching regulator is periodically repeatedly suppressed for a specified time duration and the sensor circuit is activated respectively within at least a part of this time duration.

14. The method according to claim 12 or 13, **characterised in that** controlling the switching regulator for lowering the battery voltage to a fraction and temporarily suppressing switching of the switching regulator during activation of the sensor circuit are performed in a power saving mode.

15. The method according to claim 14, **characterised in that** a linear regulator is coupled in between the feeding capacitor and the sensor circuit, and the switching regulator is permanently switched on in normal operating mode so that the feeding capacitor is charged to the voltage of the feeding battery.

## Revendications

1. Agencement de capteurs alimenté par batterie, notamment dans un véhicule automobile, comportant :
un circuit de capteurs, le circuit de capteurs comportant un raccord d'alimentation (13) de tension,
un condensateur d'alimentation (14) couplé avec le raccord d'alimentation (13) de tension,
un régulateur de commutation (1) couplé entre la batterie d'alimentation (9) et le condensateur d'alimentation (14), qui dans un mode d'économie de courant est réglé de sorte à abaisser à une fraction la tension de la batterie pour alimenter le condensateur d'alimentation (14) et
un circuit de commande (dans 15) couplé avec le circuit de capteurs et le régulateur de commutation (1) qui est configuré de sorte à supprimer une commutation du régulateur de commutation (1) pour recharger le condensateur d'alimentation (14), lorsqu'il active le circuit de capteurs.

2. Agencement de capteurs alimenté par batterie selon la revendication 1, **caractérisé en ce que** le circuit de commande (dans 15) est configuré de sorte à répéter périodiquement pour une durée prédéfinie la commutation du régulateur de commutation (1), en mode d'économie d'énergie et pour activer le circuit de capteurs chaque fois pendant au moins une partie de ladite durée.

3. Agencement de capteurs alimenté par batterie selon l'une quelconque des revendications 1 ou 2, **caractérisé en ce que** le raccord d'alimentation (13) de tension est connecté au condensateur d'alimentation (14) et **en ce que** la fraction de la tension d'alimentation correspond à la tension d'alimentation nominale du circuit de capteurs.

4. Agencement de capteurs alimenté par batterie selon la revendication 3, **caractérisé en ce que** le circuit de commande (dans 15) supprime la commutation du régulateur de commutation (1) **en ce qu'**il applique sur un raccord d'entrée (6) balayant la tension à régler du régulateur de commutation une tension qui est supérieure à la tension de consigne réglée.

5. Agencement de capteurs alimenté par batterie selon la revendication 4, **caractérisé en ce que** le circuit de capteurs comprend au moins deux capteurs activés successivement et **en ce que** le circuit de commande (dans 15) est configuré de telle sorte qu'en mode d'économie de courant, de manière périodiquement répétée, il supprime la commutation du régulateur de commutation (1) sur plusieurs durées consécutives prédéfinies, dont le nombre correspond au nombre des capteurs et que chaque fois pendant cette durée, il active le capteur associé.

6. Agencement de capteurs alimenté par batterie selon la revendication 5, **caractérisé en ce que** le circuit de commande (dans 15) est configuré de telle sorte qu'entre les durées consécutives prédéfinies de l'activation des capteurs, des temps de pause de désactivation de tous les capteurs soient prévus, pendant ces temps de pause, le circuit de commande assurant un rechargement immédiat du condensateur d'alimentation, **en ce qu'**il applique sur le raccord d'entrée (6) balayant la tension à régler du régulateur de commutation (1) une tension qui est nettement inférieure à la tension de consigne réglée.

7. Agencement de capteurs alimenté par batterie selon la revendication 1 ou la revendication 2, **caractérisé en ce que** le raccord d'alimentation (13) de tension est connecté au condensateur d'alimentation (14) par l'intermédiaire d'un régulateur en série (36) et **en ce que** la fraction de la tension d'alimentation est supérieure à la tension d'alimentation nominale du circuit de capteurs.

8. Agencement de capteurs alimenté par batterie selon la revendication 7, **caractérisé en ce que** dans un mode de fonctionnement normal, un composant de commutation (10, 28) du régulateur de commutation (1) reste activé de telle sorte que l'entrée du régulateur en série (36) soit alimentée par la tension de la batterie.

9. Agencement de capteurs alimenté par batterie selon l'une quelconque des revendications 1 à 3, 7 ou 8, **caractérisé en ce que** le circuit de commande (dans 15) comprend un circuit de réglage destiné à commander un composant de commutation (10, 28) du régulateur de commutation, une borne d'entrée du circuit de commande (dans 15) détectant la tension appliquée sur le condensateur d'alimentation (14) et une borne de sortie du circuit de commande (dans 15) commandant la commutation du composant de commutation (10, 28) en fonction de la tension appliquée au condensateur d'alimentation et de l'activation du circuit de commande.

10. Agencement de capteurs alimenté par batterie selon l'une quelconque des revendications 1 à 9, **caractérisé en ce que** le régulateur de commutation (1) est un abaisseur de tension.

11. Agencement de capteurs alimenté par batterie selon l'une quelconque des revendications 1 à 10, **caractérisé en ce que** le circuit de capteurs comprend au moins un capteur capacitif avec un circuit d'évaluation associé, destiné à détecter une approche d'une partie du corps de l'utilisateur.

12. Procédé de fonctionnement d'un circuit de capteurs,
le circuit de capteurs étant alimenté en énergie à partir d'un condensateur d'alimentation,
le condensateur d'alimentation étant rechargé par un régulateur de commutation couplé entre la batterie d'alimentation et le condensateur d'alimentation,
le régulateur de commutation étant commandé de sorte à abaisser la tension de la batterie à une fraction, pour alimenter le condensateur d'alimentation et qu'une commutation du régulateur de commutation soit supprimée par intermittence, de telle sorte que le condensateur d'alimentation soit isolé de la batterie d'alimentation,
le circuit de capteurs étant activé pendant la suppression de la commutation.

13. Procédé selon la revendication 12, **caractérisé en ce que**, de manière périodiquement répétée, la commutation du régulateur de commutation est supprimée sur une durée prédéfinie et le circuit de capteurs est activé, chaque fois pendant au moins une partie de ladite durée.

14. Procédé selon la revendication 12 ou la revendication 13, **caractérisé en ce que** la commande du régulateur de commutation pour abaisser la tension de la batterie à une fraction et la suppression par intermittence de la commutation du régulateur de commutation sont réalisées pendant l'activation du circuit de capteurs dans un mode d'économie de courant.

15. Procédé selon la revendication 14, **caractérisé en ce qu'**entre le condensateur d'alimentation et le circuit de capteurs est couplé un régulateur en série et dans un mode de fonctionnement normal, le régulateur de commutation est durablement activé, de sorte que le condensateur d'alimentation se charge à la tension de la batterie d'alimentation.
